# FASCICULE DE BREVET EUROPEEN

(11) **EP 2 344 937 B1**
(45) Date de publication et mention de la délivrance du brevet: **12.12.2012**
(21) Numéro de dépôt: 09756015.5
(22) Date de dépôt: 13.10.2009
(51) Int. Cl.: G05D 1/06

(54) **PROCÉDÉ ET SYSTÈME DE CONTRÔLE DE L'APPONTAGE/DÉCOLLAGE AUTOMATIQUE D'UN DRONE SUR OU D'UNE GRILLE CIRCULAIRE D'APPONTAGE D'UNE PLATE-FORME NOTAMMENT NAVALE**
VERFAHREN UND SYSTEM ZUM STEUERN DES AUTOMATISCHEN LANDENS/STARTENS EINER DRONE AUF ODER VON EINEM KREISFÖRMIGEN LANDEGITTER EINER PLATTFORM, INSBESONDERE EINER SEEPLATTFORM
METHOD AND SYSTEM FOR CONTROLLING THE AUTOMATIC LANDING/TAKE-OFF OF A DRONE ON OR FROM A CIRCULAR LANDING GRID OF A PLATFORM, IN PARTICULAR A NAVAL PLATFORM

(30) Priorité: 13.10.2008 FR 0856927
(43) Date de publication de la demande: 20.07.2011
(73) Titulaire: DCNS, 75015 Paris (FR)
(72) Inventeur: MORESVE, Julien Pierre Guillaume, F/-29480 Le Relecq-kerhuon (FR)
(74) Mandataire: Blot, Philippe Robert Emile
(86) Numéro de dépôt international: PCT/FR2009/051948
(87) Numéro de publication internationale: WO 2010/043812

(56) Documents cités:
- FR-A- 2 727 082
- US-A1- 2005 033 489

## Description

La présente invention concerne un procédé et un système de contrôle de l'appontage/décollage automatique d'un drone sur ou d'une grille circulaire d'appontage d'une plate-forme notamment navale.

On sait que le problème du contrôle de l'appontage/décollage d'un drone sur une plate-forme notamment navale se pose depuis déjà plusieurs années.

En particulier, untel contrôle doit être assuré par exemple par mer forte sur une plate-forme navale de taille réduite de type corvette par exemple et ce, quelle que soit la taille du drone, qui peut lui également être de taille réduite et dont les mouvements sont alors à haute fréquence.

On a déjà proposé dans l'état de la technique des procédés de contrôle automatique de ce type qui mettent en oeuvre par exemple des moyens à laser, GPS, optiques, ou autres.

Ces différents moyens permettent alors de déclencher un appontage du drone selon des stratégies de posé qui varient également selon différentes propositions dans l'état de la technique.

Ainsi par exemple, une stratégie de posé déjà proposée consiste à asservir en permanence la position du drone par rapport au pont de la plate-forme.

D'autres stratégies de posé consistent à prédire une position particulière du pont comme par exemple un haut de vague, pour déclencher l'appontage.

D'autres stratégies consistent également à déclencher le posé aux minimas de vitesse de déplacement du pont. US2005/033489 est un exemple de procédé d'appontage connu.

Cependant, aucune des solutions proposées jusqu'à présent n'a donné pleinement satisfaction en particulier par mer forte.

Le but de l'invention est donc de résoudre ces problèmes.

A cet effet l'invention a pour objet un procédé de contrôle de l'appontage/décollage automatique d'un drone sur ou d'une grille circulaire d'appontage d'une plate-forme navale, comportant les étapes suivantes :
- une étape d'acquisition des mouvements de la grille,
- une étape de calcul de la position moyenne de la grille,
- une étape de calcul de prédictions de position de la grille,
- une étape de calcul des minimas de vitesse de déplacement de la grille,
- une étape d'acquisition de la position du drone pour :
   - si le drone ne peut pas suivre les mouvements de la grille et si les mouvements de la grille sont faibles, c'est-à-dire inférieurs au rayon de celle-ci, appliquer une stratégie de posé par suivi de la position moyenne de la grille, alors que si les mouvements de la grille sont amples, c'est-à-dire supérieurs au rayon de la grille, appliquer une stratégie de posé par positionnement aux minimas de vitesse de la grille ; et
   - si le drone peut suivre les mouvements de la grille et si les mouvements de la grille sont faibles, c'est-à-dire inférieurs au rayon de la grille, appliquer une stratégie de posé selon la position moyenne de la grille et si les mouvements de la grille sont amples, c'est-à-dire supérieurs au rayon de la grille, appliquer une stratégie de posé par suivi de la position de grille prédite au moment de l'appontage.

Selon d'autres aspects de l'invention le procédé et le système de contrôle de l'appontage/décollage automatique d'un drone comprend l'une des caractéristiques suivantes :
- il comporte une étape de contrôle des conditions dynamiques en vitesse et en attitude de la plate-forme et du drone, une étape de vérification que le drone est bien à la verticale de la grille et une étape de vérification que la position de la grille prédite lorsque celui-ci aura terminé sa descente, est bien située sous ce drone, pour délivrer l'ordre d'appontage au drone,
- il comporte avant la phase d'appontage proprement dite une phase de rendez-vous entre le drone et la plate-forme à un point géographique prédéterminé à l'arrière de la plate-forme, suivi d'une phase d'approche au cours de laquelle la trajectoire d'approche est orientée globalement selon le cap moyen de déplacement de la plate-forme pour réaliser une approche par l'arrière de celle-ci,
- il comporte une étape de vérification de conditions d'attitude de la plate-forme, avant de donner l'ordre de décollage au drone, et
- l'étape de contrôle des conditions d'attitude consiste à calculer des prédictions de roulis et de tangage de la plate-forme et à vérifier que ces prédictions de roulis et de tangage de la plate-forme, pendant le temps nécessaire au décollage, sont à l'intérieur de seuils limites prédéterminés.

Selon un autre aspect, l'invention a également pour objet un système pour la mise en oeuvre de ce procédé.

L'invention sera mieux comprise à l'aide de la description qui va suivre donnée uniquement à titre d'exemple et faite en se référant aux dessins annexés sur lesquels :
- les figures 1 et 2 représentent des vues de côté et de dessus d'une plate-forme navale et la trajectoire d'approche d'un drone,
- la figure 3 illustre l'appontage d'un tel drone,
- la figure 4 illustre un diagramme d'état d'un procédé d'appontage automatique selon l'invention,
- les figures 5 et 6 illustrent des simulations d'impacts d'appontage obtenus par la mise en oeuvre d'un procédé de contrôle selon l'invention, et
- la figure 7 illustre un diagramme d'état d'un procédé de décollage automatique selon l'invention.

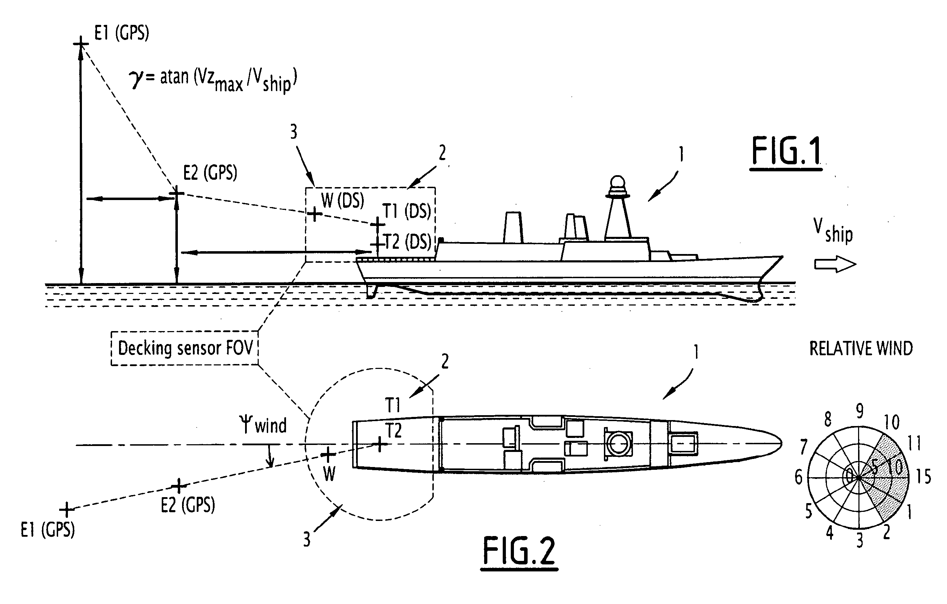

On a illustré sur les figures 1, 2 et 3, un procédé de contrôle de l'appontage automatique d'un drone sur une grille circulaire d'appontage d'une plate-forme navale.

Cette plate-forme est par exemple désignée par la référence générale 1 sur ces figures et comporte donc une zone d'appontage désignée par la référence générale 2, munie d'une grille adaptée pour recevoir par exemple un harpon de maintien en position du drone lorsque celui-ci est posé, de façon classique.

En fait, le procédé de contrôle selon l'invention consiste à amener le drone dans un champ proche de la plate-forme grâce aux informations de géolocalisation de cette plate-forme, puis à piloter automatiquement le drone en vitesse, relativement à cette plate-forme, grâce un capteur de mouvements à haute fréquence de type par exemple capteur d'appontage optique, afin de l'amener à se poser en toute sécurité sur la grille d'appontage de la plate-forme.

A cet effet, on traite les mesures de position et de vitesse de la plate-forme pour élaborer une trajectoire d'approche du drone puis on traite les mesures d'écartométrie de position plate-forme/drone hybridées avec les mesures inertielles de la plate-forme pour élaborer une trajectoire finale d'appontage du drone

La trajectoire calculée est similaire à celle de l'appontage d'un hélicoptère pour établir un régime établi de circulation d'air autour des superstructures de la plate-forme et garantir la stabilité du vol, mais aussi pour que les contrôles visuels de sécurité soient identiques à ceux des hélicoptères pour l'officier aviation.

Il ne s'agit donc pas de faire uniquement un asservissement permanent de la position du drone par rapport au pont de la plate-forme, mais bien de positionner le drone à un endroit particulier au dessus du mouvement général du pont puis d'attendre que les conditions de position, de vitesse et d'attitude soient réunies.

Il ne s'agit pas non plus uniquement de prédire un haut de vague pour apponter.

En effet, la prédiction à court terme des positions et des attitudes du pont permet juste de vérifier que les conditions seront toujours réunies au touché, le durcissement du train d'atterrissage du drone permettant d'encaisser les vitesses correspondantes.

De plus, la distance relative des deux engins c'est-à-dire de la plate-forme et du drone, durant la phase critique du posé, est surveillée par une technologie non GPS, par exemple optique et donc disponible en permanence et fiable.

En fait, la récupération du drone est divisée en trois phases générales illustrées sur ces figures 1, 2 et 3.

Ces phases sont le rendez-vous, l'approche et le posé.

Le rendez-vous du drone avec la plate-forme est une phase de positionnement du drone sur un point par exemple GPS fixe du repère géographique NED (pour North East Down).

Ce point est placé en altitude de sécurité vers l'arrière de la plate-forme à la date du rendez-vous estimé. Ce point est désigné par E1 sur les figures 1 et 2.

L'approche est une séquence qui permet au drone d'entrer sur le pont dans la direction du vent relatif.

Les informations de géolocalisation moyenne de la plate-forme permettent de définir une trajectoire d'approche de consigne pour le drone, par alignement des deux engins à partir du point E1.

La trajectoire d'approche est orientée globalement selon le cap moyen de la plate-forme pour réaliser une approche par l'arrière de cette plate-forme face au hangar hélicoptère de celle-ci par exemple.

Ensuite, la trajectoire du drone est orientée finement vers le vent infini amont de la plate-forme s'il est compris dans le gabarit de vent autorisé du couple drone/plate-forme. S'il ne l'est pas, le contrat de vent n'est pas rempli par la passerelle aviation de la plate-forme et la route du navire doit changer pour observer ce gabarit de vent.

Cette trajectoire d'approche passe par un point E2 illustré sur ces figures 1 et 2, le drone se rapprochant de la plate-forme en distance et en altitude.

Le drone poursuivant son approche de la plate-forme, il entre dans le champ de vue de moyens d'écartométrie optiques implantés sur la plate-forme, ce champ de vue étant désigné par la référence générale 3 sur ces figures 1 et 2.

Débute alors la phase de pilotage précis du drone en vue de son appontage.

Le drone est alors amené sous le contrôle des moyens formant capteur d'écartométrie à enchaîner des consignes de position W, T1 et T2 avec des phases d'attente prévues sur chacun de ces points, pour vérifier si les conditions dynamiques de l'appontage sont réunies et en particulier les vitesses relatives et les angles d'attitude entre le pont et le drone.

La stratégie de posé mise en oeuvre va alors dépendre des mouvements de la plate-forme et de la dynamique du drone.

Ainsi, si le drone ne peut pas suivre les mouvements de la grille et si les mouvements de la grille sont faibles, c'est-à-dire inférieurs au rayon de celle-ci, on va alors appliquer une stratégie de posé par suivi de la position moyenne de la grille, alors que si les mouvements de la grille sont amples, c'est-à-dire supérieurs au rayon de la grille, on va alors appliquer une stratégie de posé par positionnement aux minimas de vitesse de la grille.

Si le drone peut suivre les mouvements de la grille et si les mouvements de la grille sont faibles, c'est-à-dire inférieurs au rayon de la grille, on va appliquer une stratégie de posé selon la position moyenne de la grille et si les mouvements de la grille sont amples, c'est-à-dire supérieurs au rayon de la grille, on va appliquer une stratégie de posé par suivi de la position de grille prédite au moment de l'appontage.

L'ordre de descente verticale est donné lorsque le drone est en T2 et que les conditions suivantes sont satisfaites simultanément :
1) Les conditions dynamiques en vitesse et en attitude sont réunies, celles-ci dépendant essentiellement de la résistance du train d'atterrissage et de la hauteur du centre de gravité du drone.
2) Le drone est mesuré à la verticale de la grille par les moyens formant capteur d'écartométrie optique.
3) La position de la grille est prédite sous le drone lorsqu'il aura terminé sa descente verticale, c'est-à-dire par exemple en moins de 5 secondes.

Pour observer les mouvements de la grille et déterminer la stratégie de posé, on utilise le principe d'extraction des mouvements de la grille dans le repère pseudo inertiel moyen de la plate-forme et la prédiction court terme de la position de la grille utilise des techniques de traitement de signal classiques pour identifier statistiquement le comportement d'un système physique en utilisant une technique d'estimation des coefficients d'un filtre oscillant juste stable, pour prédire la position de la grille dans un repère pseudo inertiel allant à la vitesse de la plate-forme.

Le conditionnement numérique des coefficients du filtre est déterminant et compte tenu des composants aléatoires du mouvement de la plate-forme, ces techniques permettent une prédiction fiable sur quelques secondes, ce qui suffit à valider que l'appontage va s'effectuer correctement.

Tous ces moyens sont déjà bien connus dans l'état de la technique et ne seront donc pas décrits plus en détail par la suite.

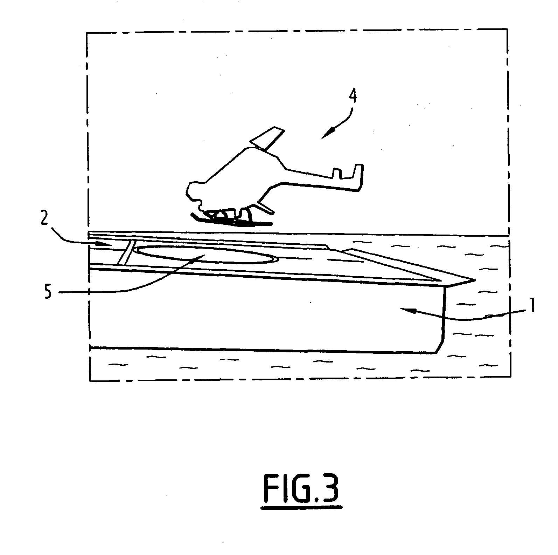

Ainsi que cela est illustré sur la figure 3, ceci permet d'amener le drone, désigné par la référence générale 4 sur cette figure, au dessus du pont de la plate-forme 1 et en particulier au dessus de la grille d'appontage 5 de celui-ci.

Une fois posé, un moyen de sécurisation du drone sur le pont peut être activé, comme par exemple un harpon dans la grille d'appontage.

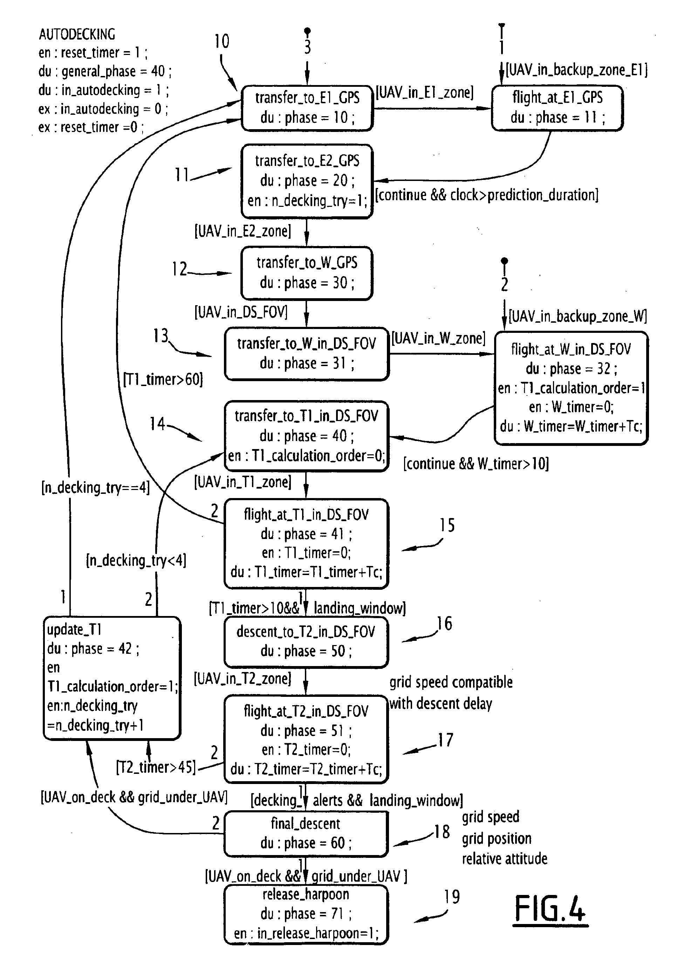

Ceci est illustré par exemple sur la figure 4, où l'on peut constater que les différents ordres envoyés au drone et plus particulièrement à ses moyens de pilotage automatique, lui commandent en 10 de se placer au point E1, en 11 de se placer au point E2, en 12 de se placer au point W, où le contrôle de sa position passe du système GPS au capteur d'écartométrie optique en 13.

Le drone se déplace ensuite en T1 comme cela est illustré en 14 puis après une phase d'attente en 15, descend en T2 en 16 et après une phase d'attente en 17, se pose sur le pont en 18, avant de déclencher les moyens de sécurisation tels que par exemple le harpon en 19.

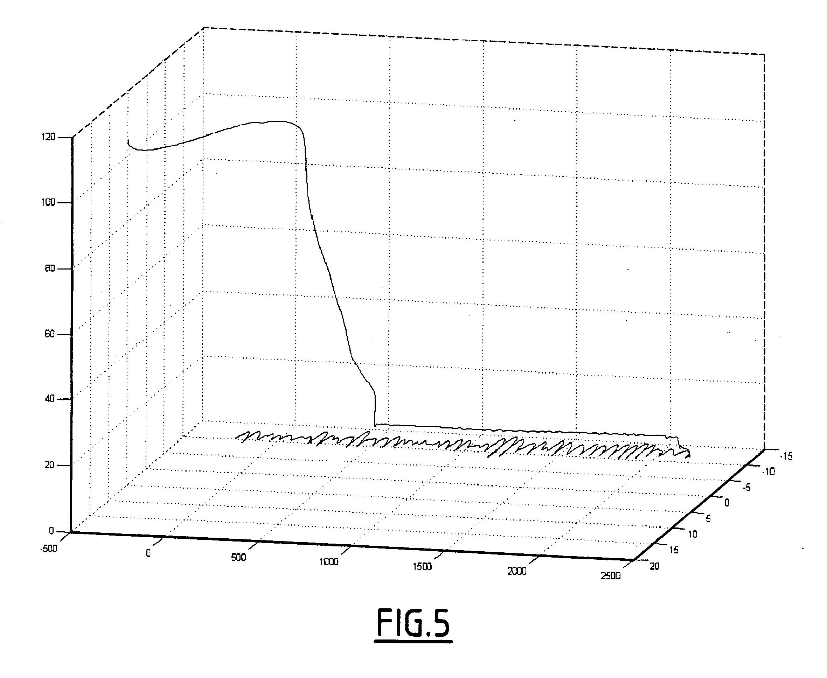

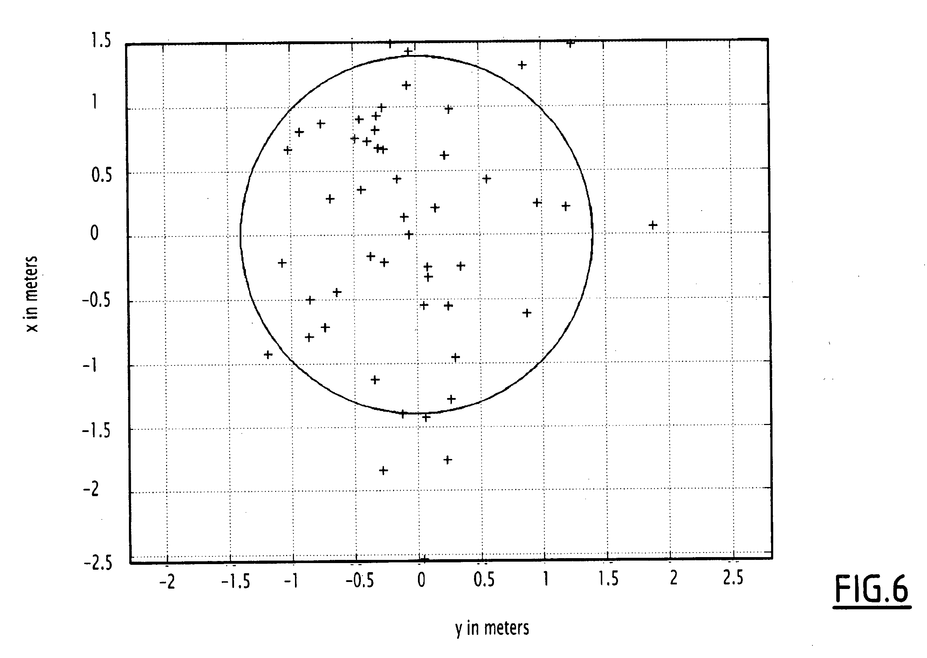

Les figures 5 et 6 illustrent des simulations de trajectoires et d'impacts à l'appontage, sous la forme d'un balayage de simulation de type Monte Carlo, de 50 appontages par mer force 5 avec une houle de 165° (15° à l'avant).

Ces figures montrent que sur 50 simulations d'appontage, 39 ont été réussies du premier coup.

11 appontages sont à côté de la grille au premier posé et dans ce cas le drone est amené à redécoller et à retenter un appontage.

Des essais en grandeur nature ont démarré et ont confirmé la fiabilité de ce procédé de contrôle.

De même, le procédé selon l'invention comporte également une étape de vérification de conditions d'attitude de la plate-forme avant de donner l'ordre de décollage au drone.

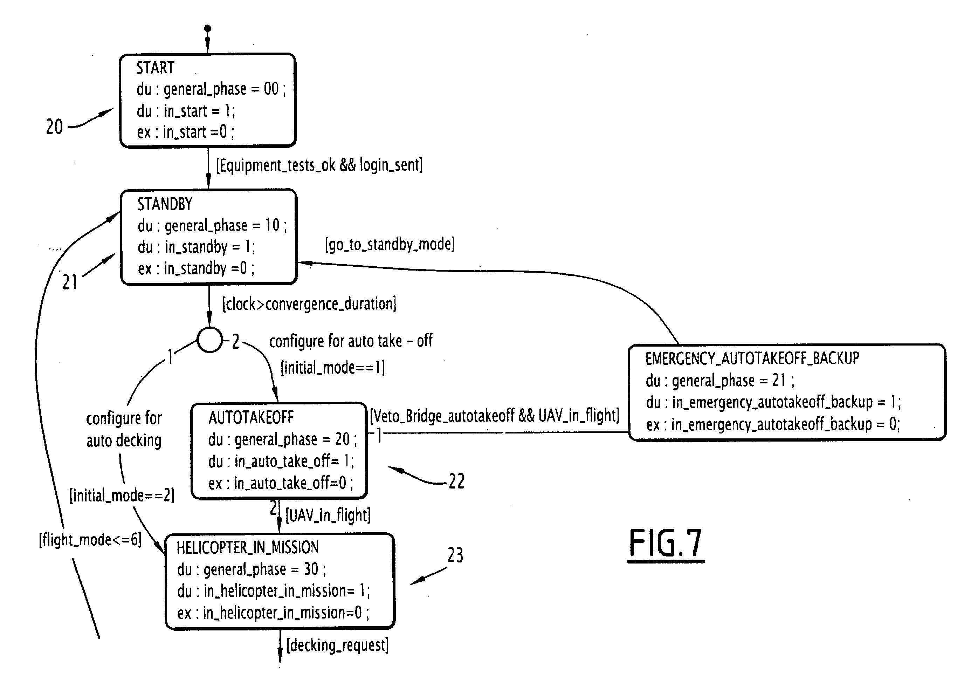

Cette étape de contrôle consiste à calculer des prédictions de roulis et de tangage de la plate-forme et à vérifier que ces prédictions de roulis et de tangage, pendant le temps nécessaire au décollage, sont à l'intérieur de seuils limites prédéterminés comme cela est illustré sur la figure 7, ou après une étape de démarrage illustré en 20, le drone est mis en attente en 21 avant de déclencher en 22 son décollage automatique, à partir de quoi le drone est considéré comme étant en mission en 23.

Ainsi, le décollage automatique est conditionné par les conditions d'attitude de la plate-forme au moment du décollage, de manière à éviter que le drone ne décolle trop incliné et prenne une vitesse horizontale inattendue.

Le principe du décollage consiste alors à rejoindre le point E1 après l'ordre de décollage en sachant que l'ordre de décollage n'est lancé qu'après une prédiction continue des attitudes de la plate-forme en roulis et tangage à l'intérieur des seuils autorisés pendant le temps nécessaire au décollage.

Le système de mise en oeuvre de ce procédé comporte alors un certain nombre de moyens d'acquisition de données comme par exemple des mouvements de la grille et de calcul comme par exemple de la position moyenne de cette grille ou encore de prédictions de position de la grille et des minimas de la vitesse de déplacement de celle-ci.

Il comporte également des moyens d'acquisition de la position du drone et des moyens de transmission d'ordres de commande au drone et plus particulièrement aux moyens de pilotage automatique de celui-ci afin de l'amener à apponter et/ou à décoller en toute sécurité.

Ces moyens à base de centrales inertielles d'acquisitions de données, de systèmes GPS, optiques ou autres présentant des structures classiques, on ne les décrira pas plus en détails par suite.

En fait, ces moyens peuvent présenter n'importe quelles structures appropriées intégrant des programmes d'ordinateurs pour la mise en oeuvre des différentes étapes décrites précédemment.

## Revendications

1. Procédé de contrôle de l'appontage/décollage automatique d'un drone (4) sur ou d'une grille circulaire d'appontage (5) d'une plate-forme navale (1), procédé comportant une étape d'acquisition des mouvements de la grille (5), **caractérisé en ce qu'**il comporte les étapes suivantes:
- une étape de calcul de la position moyenne de la grille (5),
- une étape de calcul de prédictions de position de la grille (5),
- une étape de calcul des minimas de vitesse de déplacement de la grille (5), et
- une étape d'acquisition de la position du drone (4) pour :
. si le drone (4) ne peut pas suivre les mouvements de la grille (5) et si les mouvements de la grille (5) sont faibles, c'est-à-dire inférieurs au rayon de celle-ci, appliquer une stratégie de posé par suivi de la position moyenne de la grille, alors que si les mouvements de la grille sont amples, c'est-à-dire supérieurs au rayon de la grille, appliquer une stratégie de posé par positionnement aux minimas de vitesse de la grille ; et
. si le drone (4) peut suivre les mouvements de la grille et si les mouvements de la grille (5) sont faibles, c'est-à-dire inférieurs au rayon de la grille, appliquer une stratégie de posé selon la position moyenne de la grille et si les mouvements de la grille sont amples, c'est-à-dire supérieurs au rayon de la grille, appliquer une stratégie de posé par suivi de la position de grille prédite au moment de l'appontage.

2. Procédé de contrôle de l'appontage/décollage automatique d'un drone selon la revendication 1, **caractérisé en ce qu'**il comporte une étape de contrôle des conditions dynamiques en vitesse et en attitude de la plate-forme (1) et du drone (4), une étape de vérification que le drone (4) est bien à la verticale de la grille (5) et une étape de vérification que la position de la grille (5) prédite lorsque celui-ci aura terminé sa descente, est bien située sous ce drone, pour délivrer l'ordre d'appontage au drone.

3. Procédé de contrôle de l'appontage/décollage automatique d'un drone selon la revendication 1 ou 2, **caractérisé en ce qu'**il comporte avant la phase d'appontage proprement dite une phase de rendez-vous entre le drone (4) et la plate-forme (1) à un point géographique prédéterminé à l'arrière de la plate-forme, suivie d'une phase d'approche au cours de laquelle la trajectoire d'approche est orientée globalement selon le cap moyen de déplacement de la plate-forme pour réaliser une approche par l'arrière de celle-ci.

4. Procédé de contrôle de l'appontage/décollage automatique d'un drone selon l'une quelconque des revendications précédentes, **caractérisé en ce qu'**il comporte une étape de vérification de conditions d'attitude de la plate-forme (1), avant de donner l'ordre de décollage au drone (4).

5. Procédé de contrôle de l'appontage/décollage automatique d'un drone selon la revendication 4, **caractérisé en ce que** l'étape de contrôle des conditions d'attitude consiste à calculer des prédictions de roulis et de tangage de la plate-forme (1) et à vérifier que ces prédictions de roulis et de tangage de la plate-forme, pendant le temps nécessaire au décollage du drone (4), sont à l'intérieur de seuils limites prédéterminés.

6. Système de contrôle de l'appontage/décollage automatique d'un drone (4) sur ou d'une grille circulaire d'appontage (5) d'une plate-forme navale (1), comportant des moyens d'acquisition des mouvements de la grille (5), **caractérisé en ce qu'**il comporte des moyens de calcul de la position moyenne de la grille (5), des moyens de calcul de prédictions de position de la grille (5), des moyens de calcul des minimas de vitesse de déplacement de la grille (5), des moyens d'acquisition de la position du drone et des moyens de vérification de conditions d'attitude de la plate-forme, pour mettre en oeuvre le procédé selon l'une quelconque des revendications précédentes.

## Claims

1. Method for controlling the automatic landing/take-off of a drone (4) on or from a circular landing grid (5) of a naval platform (1), the method comprising a step of acquiring the movements of the grid (5), **characterised in that** it comprises the following steps:
- a step of calculating the mean position of the grid (5),
- a step of calculating predictions of the position of the grid (5),
- a step of calculating the minimum movement speeds of the grid (5), and
- a step of acquiring the position of the drone (4) in order:
- if the drone (4) cannot follow the movements of the grid (5) and if the movements of the grid (5) are small, that is to say, smaller than the radius thereof, to apply a placement strategy by monitoring the mean position of the grid, whilst, if the movements of the grid are large, that is to say, greater than the radius of the grid, to apply a placement strategy by means of positioning at the minimum speed values of the grid; and,
- if the drone (4) can follow the movements of the grid and if the movements of the grid (5) are small, that is to say, smaller than the radius of the grid, to apply a placement strategy in accordance with the mean position of the grid and, if the mouvements of the grid are large, that is to say, greater than the radius of the grid, to apply a placement strategy by monitoring the predicted position of the grid at the time of landing.

2. Method for controlling the automatic landing/take-off of a drone according to claim 1, **characterised in that** it comprises a step of controlling the dynamic conditions in terms of speed and orientation of the platform (1) and the drone (4), a step of verifying that the drone (4) is at the vertical in respect of the grid (5) and a step of verifying that the predicted position of the grid (5) when it has terminated its descent is located below this drone, in order to supply the landing order to the drone.

3. Method for controlling the automatic landing/take-off of a drone according to claim 1 or 2, **characterised in that** it comprises, before the actual landing phase, a phase for meeting between the drone (4) and the platform (1) at a predetermined geographical location at the rear of the platform, followed by an approach phase during which the approach trajectory is orientated generally in accordance with the mean movement course of the platform in order to carry out an approach from the rear thereof.

4. Method for controlling the automatic landing/take-off of a drone according to any one of the preceding claim, **characterised in that** it comprises a step of verification of the orientation conditions of the platform (1) before giving the order for take-off to the drone (4).

5. Method for controlling the automatic landing/take-off of a drone according to claim 4, **characterised in that** the step for controlling the orientation conditions involves calculating the rolling and pitch predictions of the platform (1) and verifying that these rolling and pitch predictions of the platform, during the time required for the take-off of the drone (4), are inside predetermined threshald limits.

6. System for controlling the automatic landing/take-off of a drone (4) on or from a circular landing grid (5) of a naval platform (1), comprising means for acquiring the movements of the grid (5), **characterised in that** it comprises means for calculating the mean position of the grid (5), means for calculating predictions of the position of the grid (5), means for calculating the minimum movement speed values of the grid (5), means for acquiring the position of the drone and means for verifying the orientation conditions of the platform in order to implement the method according to any one of the preceding claims.

## Patentansprüche

1. Verfahren zur Kontrolle des automatischen Landen s/Abhebens einer Drohne (4) auf oder von einem kreisförmigen Landegitter (5) einer Schiffsplattform (1), Verfahren, das einen Schritt der Erfassung der Bewegungen des Gitters (5) umfasst, **dadurch gekennzeichnet, dass** es die folgenden Schritte umfasst:
- einen Schritt zur Berechnung der mittleren Position des Gitters (5),
- einen Schritt zur Berechnung von Vorhersagen der Position des Gitters (5),
- einen Schritt zur Berechnung der Geschwindigkeits-Minima der Bewegungen des Gitters (5), und
- einen Schritt zur Erfassung der Position der Drohne (4), um
- in dem Fall, dass die Drohne (4) den Bewegungen des Gitters (5) nicht folgen kann und dass die Bewegungen des Gitters (5) gering sind d. h. kleiner als dessen Radius, eine Landestrategie durch Folgen der mittleren Position des Gitters anzuwenden, während in dem Fall, dass die Bewegungen des Gitters groß sind, d. h. größer, als der Radius des Gitters, eine Landestrategie durch Positionierung in den Geschwindigkeitsminima des Gitters abgewandt wird: und
- in dem Fall. dass die Drohne (4) den Bewegungen des Gitters (5) folgen kann und dass die Bewegungen des Gitters (5) gering sind, d. h. kleiner als dessen Radius, eine Landestrategie durch Folgen der mittleren Position des Gitters anzuwenden, während in dem Fall, dass die Bewegungen des Gitters groß sind, d. h. größer, als der Radius des Gitters, eine Landestrategie durch Folgen der für den Aufsetzzeitpunkt vorhergesagten Position des Gitters angewandt wird.

2. Verfahren zur Kontrolle des automatischen Landens/Abhebens einer Drohne nach Patentanspruch 1, **dadurch gekennzeichnet, dass** es einen Schritt der Kontrolle der dynamischen Geschwindigkeits- und Lagebedingungen der Plattform (1) und der Drohne (4) umfasst, einen Schritt der Prüfung, dass die Drohne (4) sich tatsächlich vertikal über dem Gitter (5) befindet, und einen Schritt der Prüfung dass sich die für den Zeitpunkt, zu dem sie ihren Sinkflug beendet haben würde, vorhergesagte Position des Gitters (5) tatsächlich unter dieser Drohne befindet, um der Drohne die Landeanweisung zu erteilen.

3. Verfahren zur Kontrolle des automatischen Landens/Abhebens einer Drohne nach Patentanspruch 1 oder 2 **dadurch gekennzeichnet, dass** es vor der eigentlichen Landephase eine Phase eines Treffens von Drohne (4) und Plattform (1) in einem festgelegten geographischen Punkt hinter der Plattform umfasst, gefolgt von einer Annäherungsphase, in deren Verlauf der Annäherungsweg im Wesentlichen dem mittleren Kurs der Bewegung der Plattform entsprechend orientiert ist, um eine Annäherung an diese von hinten auszuführen.

4. Verfahren zur Kontrolle des automatischen Landens/Abhebens einer Drohne nach irgendeinem der vorangehenden Patentansprüche, **dadurch gekennzeichnet, dass** es, bevor der Drohne (4) die Startanweisung erteilt wird, einen Schritt der Prüfung von Lagerbedingungen der Plattform (1) umfasst.

5. Verfahren zur Kontrolle des automatischen Landens/Abhebens einer Drohne nach Patentanspruch 4, **dadurch gekennzeichnet, dass** der Schritt der Prüfung der Lagebedingungen darin besteht, Vorhersagen über Rollen und Stampfen der Plattform (1) zu berechnen und zu prüfen, dass diese Vorhersagen über Rollen und Stampfen der Plattform in dem zum Abheben der Drohne (4) erforderlichen Zeitraum innerhalb festgelegter Grenzschwellenwerte liegen.

6. System zur Kontrolle des automatischen Landens/Abhebens einer Drohne (4) auf einem kreisförmigen Landegitter (5) einer Schiffs plattform (1). Mittel zur Erfassung der Bewegungen des Gitters (5) umfassend, **dadurch gekennzeichnet, dass** es Mittel zur Berechnung der mittleren Position des Gitters (5), Mittel zur Berechnung von Vorhersagen der Position des Gitters (5), Mittel zur Berechnung der Geschwindigkeits-Minima der Bewegungen des Gitters (5), Mittel zur Erfassung des Position der Drohne und Mittel zur Prüfung der Lagebedingungen der Plattform umfasst, um das Verfahren nach irgendeinem der vorangehenden Patentansprüche auszuführen.
